(19) Europäisches Patentamt / European Patent Office / Office européen des brevets

(11) EP 4 497 653 A1

(12) EUROPEAN PATENT APPLICATION

(43) Date of publication:
29.01.2025 Bulletin 2025/05

(21) Application number: 24160333.1

(22) Date of filing: 28.02.2024

(51) International Patent Classification (IPC):
B61L 23/04 (2006.01)          G06T 17/05 (2011.01)
G06T 7/30 (2017.01)

(52) Cooperative Patent Classification (CPC):
B61L 23/041; G06T 17/05

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 28.07.2023 JP 2023123790

(71) Applicant: Kabushiki Kaisha Toshiba
Minato-ku
Tokyo 105-8001 (JP)

(72) Inventor: BAN, Koichiro
Tokyo, 105-8001 (JP)

(74) Representative: Henkel & Partner mbB
Patentanwaltskanzlei, Rechtsanwaltskanzlei
Maximiliansplatz 21
80333 München (DE)

(54) INFORMATION PROCESSING METHOD AND DEVICE FOR ESTIMATING THE THREE-DIMENSIONAL POSITION OF A RAILROAD TRACK

(57) According to one embodiment, an information processing device includes a first image acquirer configured to acquire a first image generated by an imaging device that images a forward environment of a vehicle; a railroad track detector configured to detect, from the first image, a railroad track on which the vehicle travels; a second image acquirer configured to acquire a second image including a three-dimensional position of the forward environment, the three-dimensional position being based on distance information acquired by a ranging device that measures a distance to the forward environment; and a railroad track estimator configured to specify, in the railroad track included in the first image, a target range in which a portion corresponding to the railroad track is absent in the second image and estimate, based on information concerning the railroad track on which the vehicle travels, a three-dimensional position of a railroad track portion included in the target range in the railroad track of the first image.

FIG. 1

EP 4 497 653 A1

**Description**

<u>FIELD</u>

Approaches of the present invention relate to an information processing device and an information processing method.

<u>BACKGROUND</u>

There has been known a detection technique in which a camera and a ranging device mounted on a train are combined in order for an operator or an autonomous driving system of a traveling train to detect an obstacle that can be obstructive to traveling such as a human and a fallen object present within a construction limit of a railroad track. The ranging device is, for example, a LiDAR (Light Detection and Ranging) device. In this technique, the use of the ranging device compensates for the fact that a positional relation in the depth direction of an object reflected in an image acquired by the camera is unclear when the image alone is used. Such a technique can be particularly useful when the operator does not visually determine presence or absence of an obstacle, for example, when the autonomous driving system is adopted.

Incidentally, when an incident angle of laser light emitted from the LiDAR device is excessively large with respect to any object, most of the laser light reflected on the object sometimes does not return to the LiDAR device and ranging cannot be performed.

On the other hand, the train has a longer braking distance compared with an automobile and the like. In order to avoid collisions with obstacles, it is necessary to detect an obstacle several hundred meters ahead. However, in a railroad track present in a position farther away from the train, an incident angle of laser light is larger with respect to the railroad track. Therefore, the distance from the train to the railroad track cannot be measured by the ranging device. Therefore, the position of a railroad track present in a position far from the train cannot be specified, presence of an obstacle within a construction limit of the railroad track cannot be detected, and detection accuracy is deteriorated.

<u>BRIEF DESCRIPTION OF THE DRAWINGS</u>

FIG. 1 is a block diagram illustrating an obstacle detection system according to an approach;
FIG. 2 is a diagram illustrating the obstacle detection system mounted on a train;
FIG. 3 is a diagram illustrating an example of a forward image of the train;
FIG. 4 is a diagram illustrating an example of a railroad track image generated based on the forward image;
FIG. 5 is a diagram for explaining deviation between visual fields of a camera and a ranging device;
FIG. 6 is a diagram illustrating an example of a projection image represented by a uv coordinate system;
FIG. 7 is a diagram illustrating an example of an extracted 3D railroad track;
FIG. 8 is a diagram illustrating a position of a railroad track specified in an XYZ coordinate system;
FIG. 9 is a diagram illustrating a point on a railroad track in an non-observed range;
FIG. 10 is a diagram in which a straight line passing the point illustrated in FIG. 9 is added to FIG. 8;
FIG. 11 is a diagram illustrating the straight line illustrated in FIG. 10 on a map;
FIG. 12 is a diagram illustrating the point illustrated in FIG. 9 estimated in the XYZ coordinate system;
FIG. 13 is a diagram for explaining an estimated railroad track and a calculated construction limit;
FIG. 14 is a flowchart for explaining an example of processing performed by the obstacle detection system; and

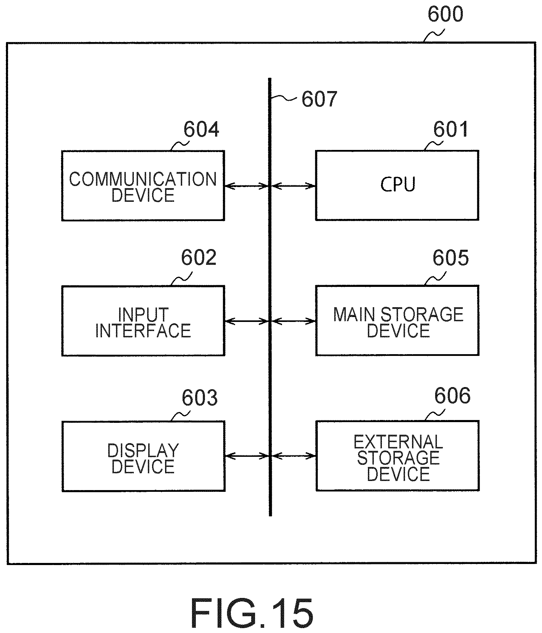

FIG. 15 is a block diagram illustrating an example of a hardware configuration in the approach of the present invention.

<u>DETAILED DESCRIPTION</u>

According to one embodiment, an information processing device includes a first image acquirer configured to acquire a first image generated by an imaging device that images a forward environment of a vehicle; a railroad track detector configured to detect, from the first image, a railroad track on which the vehicle travels; a second image acquirer configured to acquire a second image including a three-dimensional position of the forward environment, the three-dimensional position being based on distance information acquired by a ranging device that measures a distance to the forward environment; and a railroad track estimator configured to specify, in the railroad track included in the first image, a target range in which a portion corresponding to the railroad track is absent in the second image and estimate, based on information concerning the railroad track on which the vehicle travels, a three-dimensional position of a railroad track portion included in the target range in the railroad track of the first image.

An approach of the present invention is described below with reference to the drawings.

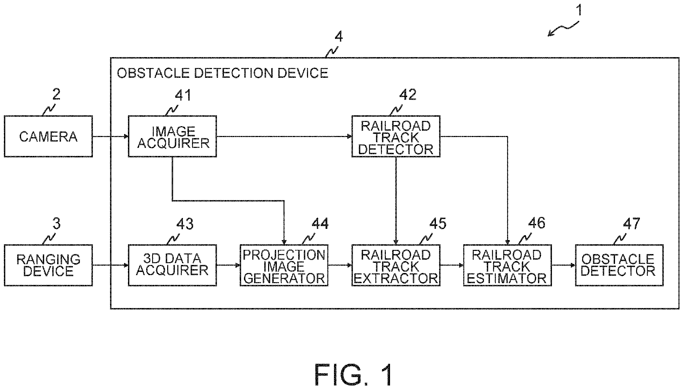

FIG. 1 is a block diagram illustrating an example of an obstacle detection system 1 according to the approach. The obstacle detection system 1 includes a camera 2, a ranging device 3, and an obstacle detection device 4.

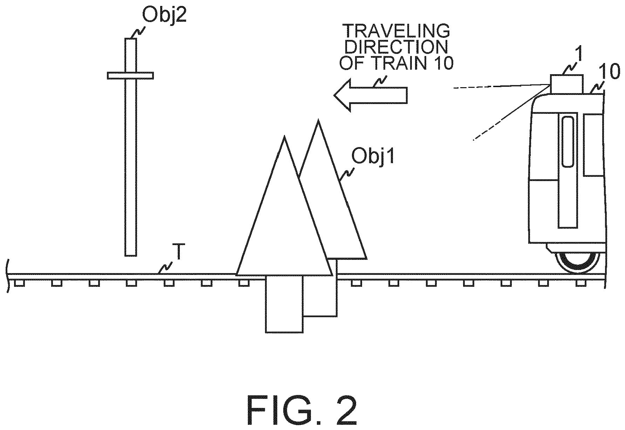

FIG. 2 is a diagram illustrating the obstacle detection system 1 mounted on a car, more specifically, a first car of a train 10. The obstacle detection system 1 is a system for determining whether an object, that is, an obstacle that can be obstructive to traveling of the train 10 is present within a construction limit of a railroad track T on which the train 10 travels, moves or runs. The obstacle is a human, a fallen object, or the like present within the construction limit of the railroad track T and does not include the railroad track T itself, the ground on which the railroad track T is disposed, and the like. Note that "first car" means a frontmost car in a traveling direction of the train 10. The train 10 is traveling on the railroad track T. An object Obj1 is present on the left side of the railroad track T when viewed from the train 10. An object Obj2 is present on the right side of the railroad track T when viewed from the train 10.

Note that, in FIG. 2, the obstacle detection system 1 is disposed outside the train 10. However, the obstacle detection system 1 may be disposed inside the train 10. In that case, the camera 2 and the ranging device 3 may respectively perform imaging and ranging through the windshield of the train 10. Only the camera 2 and the ranging device 3 may be mounted on the train 10. The obstacle detection device 4 may not be mounted on the train 10.

The camera 2 is an imaging device that images a forward environment of the train 10 and generates a forward image, which is a first image. The camera 2 is provided in a three-dimensional first coordinate system (a first world coordinate system). The camera 2 is, for example, an optical camera such as a CCD (Charge Coupled Device) camera or a CMOS (Complementary Metal Oxide Semiconductor) camera or an infrared camera (a thermo-camera) or a combination of the optical camera and the infrared camera. When the camera 2 includes the infrared camera, it is easy to detect obstacles at night and the like. The forward image is, for example, a luminance image. Pixel values of the luminance image are luminance values.

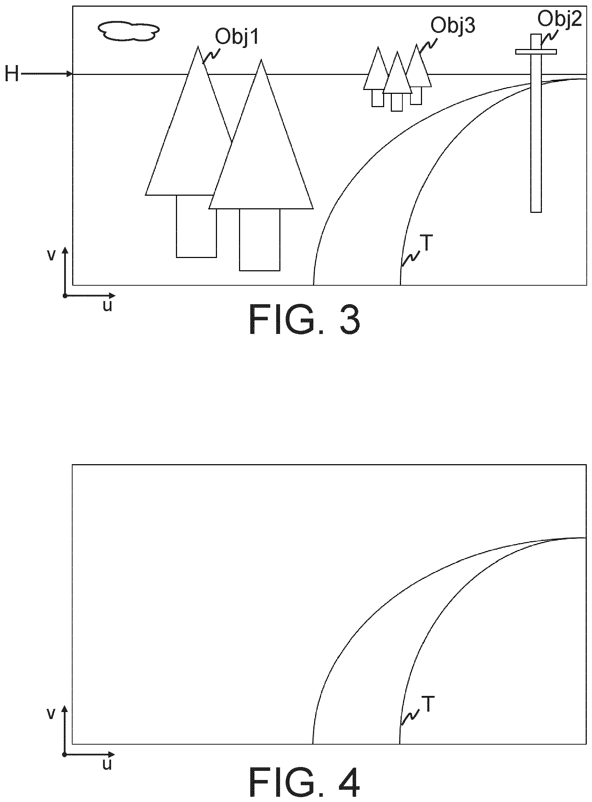

FIG. 3 is a diagram illustrating an example of a forward image captured by the camera 2. In the example illustrated in FIG. 3, the railroad track T curves to the right side when viewed from the train 10. A sign H illustrated in FIG. 3 indicates the horizon. It is assumed that the forward image is indicated by a uv coordinate system as illustrated in FIG. 3. The uv coordinate system is an image coordinate system of the camera 2.

The ranging device 3 is a device or a sensor that measures a distance to a forward environment including the objects Obj1 and Obj2. The ranging device 3 generates, based on the measured distance, a 3D image, which is a second image, including a three-dimensional position of the forward environment. The ranging device 3 is provided in a three-dimensional second coordinate system (a second world coordinate system). Three-dimensional positions are included in each pixel of the 3D image. Distance values may be included in each pixel of the 3D image. An object includes the railroad track T and the ground on which the railroad track T is disposed. The distance between the object and the train 10 is strictly the distance between the object and the ranging device 3. The ranging device 3 includes, for example, a LiDAR. When the ranging device 3 includes the LiDAR, a wavelength of laser in use may be, for example, in an eye-safe band (for example, 1.4 $\mu$m to 2.6 $\mu$m). In the following description, it is assumed that the ranging device 3 is the LiDAR. Note that the ranging device 3 may generate a distance image including a distance value to the forward environment and a 3D data acquirer 43 described below may generate a 3D image from the distance image, position information of the ranging device 3, and the like.

The ranging device 3 emits, for example, a laser pulse and scans a predetermined range of the forward environment. The ranging device 3 receives a pulse reflected to return from the forward environment to thereby acquire distance information to the forward environment (distance information to various objects included in the forward environment) and generates a 3D image.

The obstacle detection device 4 is an information processing device for determining, based on the forward image captured by the camera 2 and the 3D image acquired by the ranging device 3, whether an object to be an obstacle is present on the railroad track T in the front of the train 10. In particular, the obstacle detection device 4 makes it possible to determine whether an obstacle is present in a construction limit of a railroad track part that is reflected in the forward image but was not successfully ranged by the ranging device 3. The information processing device may additionally include the camera 2 and the ranging device 3. As illustrated in FIG. 1, the obstacle detection device 4 includes an image acquirer 41, a railroad track detector 42, a 3D data acquirer 43, a projection image generator 44, a railroad track extractor 45, a railroad track estimator 46, and an obstacle detector 47.

The image acquirer 41 is a first image acquirer that acquires the forward image (see FIG. 3) of the train 10 captured by the camera 2.

The railroad track detector 42 specifies the railroad track T from the forward image acquired by the image acquirer 41 and acquires (generates) a railroad track image indicating the railroad track T in the forward image. The railroad track detector 42 extracts the railroad track T through, for example, semantic segmentation or edge detection to generate the railroad track image. FIG. 4 is an example of the railroad track image detected by the railroad track detector 42. Like the forward image, the railroad track image is represented by the uv coordinate system (the image coordinate system of the camera 2).

The 3D data acquirer 43 is a second image acquirer that acquires a 3D image from the ranging device 3. The 3D image is represented by an image coordinate system of the ranging device 3. Note that the 3D image acquired by the 3D data acquirer 43 is a 3D image acquired substantially simultaneously with (present in substantially the same frame as) the forward image acquired by the image acquirer 41.

The projection image generator 44 projects the 3D image onto the railroad track image. The projecting the 3D image onto the railroad track image is equivalent to converting the 3D image represented by the image coordinate system of the ranging device 3 into the uv coordinate system, which is the image coordinate system of the camera 2, (representing the 3D image in the uv coordinate system).

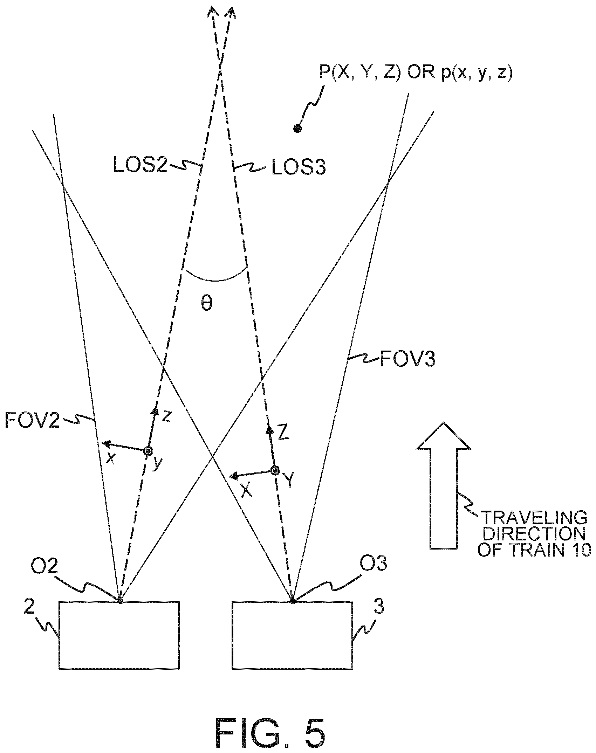

FIG. 5 is a diagram for explaining deviation between a visual field of the camera 2 and a visual field of the ranging device 3. As illustrated in FIG. 5, the camera 2 and the ranging device 3 are different in physical disposition, that is, view points and directions of the camera 2 and the ranging device 3 are different. Therefore, an origin 02, which is a view point, of a visual field FOV2 and a visual line LOS2 of the camera 2 and an origin 03, which is a view point, of a visual field FOV3 and a visual line LOS3 of the ranging device 3 are different from each other.

In the following description, as illustrated in FIG. 5, a three-dimensional coordinate in the visual field FOV2 is referred to as xyz coordinate system (world coordinate system of the camera 2 or three-dimensional coordinate system of the camera 2) and a three-dimensional coordinate in the visual field FOV3 is referred to as XYZ coordinate system (world coordinate system of the ranging device 3 or three-dimensional coordinate system of the ranging device 3). Note that a 3D image represented by the XYZ coordinate system includes only a value of a range (a part) observed by the ranging device 3 and does not include a value of a range (a part) included in the visual field FOV3 but not observed by the ranging device 3.

Any point P (X, Y, Z) in the XYZ coordinate system illustrated in FIG. 5 is conceived. A distance value of the point P is measured and a three-dimensional position of the point P is included in the 3D image. Expression (1) is an expression for matching the origin O3 and the visual line LOS3 of the visual field FOV3 of the ranging device 3 to the origin O2 and the visual line LOS2 of the visual field FOV2 of the camera 2. That is, Expression (1) is an expression for converting the point P (X, Y, Z) in the XYZ coordinate system into a point p (x, y, z) in the xyz coordinate system. A matrix R is a rotation matrix for rotating the visual field FOV3 by an angle θ. A matrix tvec is a translation matrix for translating the visual field FOV3.

According to the conversion of Expression (1), the origin O2 and the visual line LOS2 of the visual field FOV2 and the origin O3 and the visual line LOS3 of the visual field FOV3 coincide. That is, the point P included in the 3D image represented by the XYZ coordinate system can be represented as the point P of the xyz coordinate system.

[Math. 1]

$$\begin{bmatrix} x \\ y \\ z \end{bmatrix} = R \begin{bmatrix} X \\ Y \\ Z \end{bmatrix} + tvec \qquad (1)$$

Subsequently, the projection image generator 44 converts the point p (x, y, z) in the 3D image represented by the xyz coordinate system into a point p' (u, v) in the uv coordinate system using Expressions (2) to (4). First, the projection image generator 44 performs normalization at a distance z in the depth direction using Expression (2) and converts the point p included in the 3D image from a three-dimensional coordinate (an xyz coordinate system) into a two-dimensional coordinate (an x'y' coordinate system).

[Math. 2]

$$\begin{bmatrix} x' \\ y' \end{bmatrix} = \frac{1}{z} \begin{bmatrix} x \\ y \end{bmatrix} \qquad (2)$$

Subsequently, the projection image generator 44 applies a distortion function f (x, y) specific to the camera 2 indicated by Expression (3).

[Math. 3]

$$(x'', y'') = f(x', y') \qquad (3)$$

A coordinate system after the distortion function application of Expression (3) described above or the x'y' coordinate system described above corresponds to a two-dimensional coordinate system or a camera coordinate system of the camera 2.

Lastly, the projection image generator 44 converts the coordinate system of Expression (3) is converted into the uv coordinate system (the image coordinate system of the camera 2) using a camera matrix K specific to the camera 2. The camera matrix K is a 2×3 matrix.

[Math. 4]

$$\begin{bmatrix} u \\ v \end{bmatrix} = K \begin{bmatrix} x'' \\ y'' \\ 1 \end{bmatrix} \quad (4)$$

Consequently, the 3D image projected onto the railroad track image (hereinafter referred to as projection image), that is, an image formed by converting the 3D image into the uv coordinate system of the camera 2 is obtained.

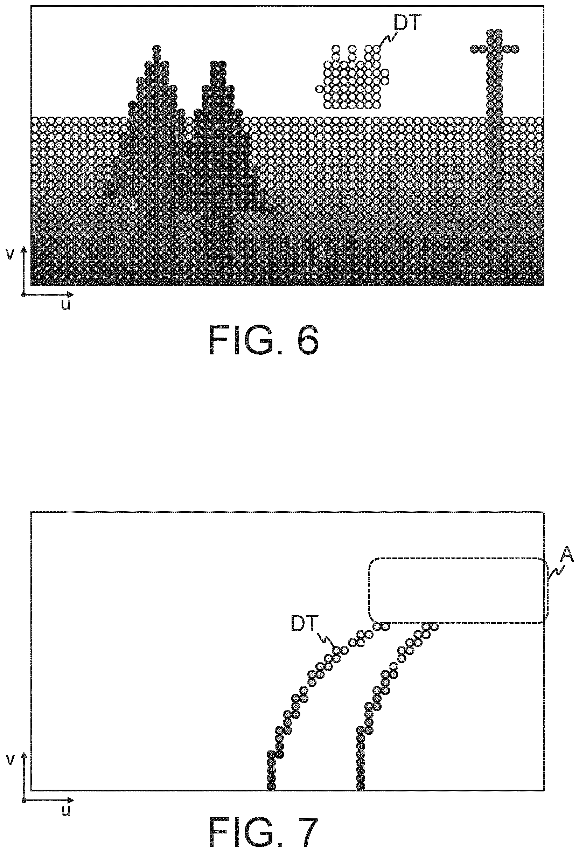

FIG. 6 is a diagram illustrating an example of the 3D image projected onto the uv coordinate system. A pixel (a dot) DT corresponds to a position (an observation point) where one reflected pulse (reflected once) is received. The 3D image is represented as a set of a plurality of pixels DT (a point group). Three-dimensional positions and distance information of corresponding pixels of the 3D image before the conversion may be associated with pixels of the projection image. In the example illustrated in FIG. 6, the distance from the train 10 is represented by light and shade of the pixel DT. A color of the pixel DT is shown lighter in a farther position from the train 10.

Pixels without colors mean pixels that have not received the reflected pulse, that is, have not been successfully observed. In a position apart from the train 10 by a certain degree, since an incident angle of the pulse light emitted from the ranging device 3 with respect to the ground or the railroad track T increases, the pixels are more often not observed. Note that it is seen from FIGS. 3 and 6 that an object Obj3 is observed because the incident angle of the pulse light emitted from the ranging device 3 is small, although the object Obj3 is relatively apart from the train 10.

The railroad track extractor 45 extracts, based on the railroad track image (see FIG. 4) and the projection image (see FIG. 6), in the projection image, an image of a railroad track portion corresponding to the railroad track T in the railroad track image. The extracted image of the railroad track portion is referred to as 3D railroad track. The railroad track extractor 45 superimposes the railroad track image and the projection image and extracts, as the 3D railroad track, a portion of the projection image overlapping the position of the railroad track T. A railroad track portion in the railroad track image overlapping the 3D railroad track corresponds to, in the railroad track T in the railroad track image, a railroad track portion where a portion corresponding thereto is present in the projection image. A pixel DT group illustrated in FIG. 7 indicates the extracted 3D railroad track. Here, a region A illustrated in the figure is a region where a railroad track portion present in the railroad track image but absent in the projection image is present. That is, the region A is a region (a non-observed ) where the railroad track portion is not observed by the ranging device 3, although it is predicted from the railroad track image that the railroad track T is present. Note that the region A is a region where not the entire inside of the region A is not observed but at least the railroad track portion is not observed and is a region illustrated for reference to facilitate understanding.

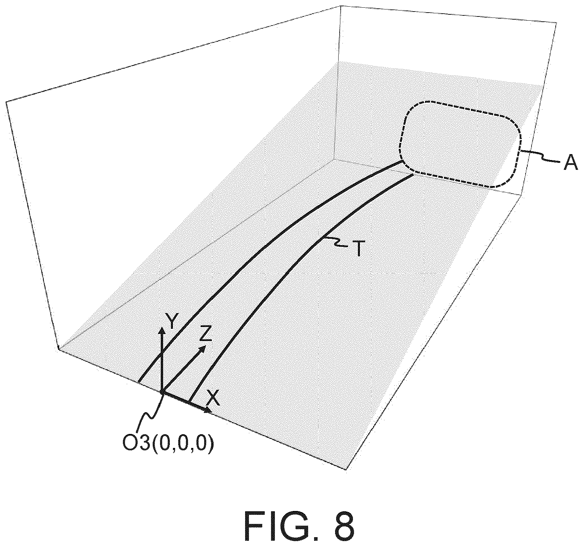

Concerning a range where measurement has been performed by the ranging device 3, the position of the railroad track T in the XYZ coordinate system can be specified as illustrated in FIG. 8 by tracing the expressions described above in reverse. FIG. 8 illustrates a portion where the position of the railroad track T has been specified in the XYZ coordinate system. Consequently, concerning the portion where the position of the railroad track T has been specified, it is possible to calculate a construction limit of the railroad track T. Accordingly, it is possible to determine whether an obstacle (an object) in the XYZ coordinate system interferes with the construction limit. On the other hand, in the region A illustrated in FIG. 8, since a railroad track portion present in the region A has not been successfully measured by the ranging device 3, no railroad track portion is displayed in the XYZ coordinate system. In the region A, since the railroad track T is not observed by the ranging device 3, although it is predicted from the railroad track image that the railroad track T is present, the position of the railroad track in the XYZ coordinate system (or the position of the railroad track T in the depth direction of the traveling direction of the train 10) cannot be specified in this state. Therefore, it is necessary to estimate a position in the XYZ coordinate system of the railroad track T in the region A.

The railroad track estimator 46 estimates a 3D railroad track in the region A. Note that the railroad track estimator 46 retains parameters concerning the camera 2 and parameters concerning the ranging device 3. The railroad track estimator 46 may use information concerning these parameters for the estimation. Processing performed by the railroad track estimator 46 is described in detail below.

Estimation of a 3D railroad track in the XYZ coordinate system is described below. As described above, the 3D image acquired by the ranging device 3 has been converted into the uv coordinate system according to Expressions (1) to (4) described above. First, in order to describe a method of estimating a 3D railroad track, a method of converting the point p' (u, v) represented by the uv coordinate system into a XYZ coordinate system is described.

First, the railroad track estimator 46 performs inverse conversion of Expression (4) using the following Expression (5). Here, K[1:2, 1:2] means a 2×2 matrix on the left side of K and K[1:2, 3] means a column vector on the rightmost side of K.

[Math. 5]

$$\begin{bmatrix} x'' \\ y'' \end{bmatrix} = K[1:2, 1:2]^{-1} \left( \begin{bmatrix} u \\ v \end{bmatrix} - K[1:2, 3] \right) \quad (5)$$

Subsequently, the railroad track estimator 46 performs inverse conversion of Expression (3) using an inverse function $f^{-1}$ of the distortion function f shown in the following Expression (6).
[Math. 6]

$$(x', y')=f^{-1}(x'', y'') \quad (6)$$

Subsequently, the railroad track estimator 46 performs inverse conversion of Expression (2) using Expression (7). Consequently, the railroad track estimator 46 can convert the point p' in the uv coordinate system into the point p in the xyz coordinate system, which is the three-dimensional coordinate system of the camera 2.
[Math. 7]

$$\begin{bmatrix} x \\ y \\ z \end{bmatrix} = z \begin{bmatrix} x' \\ y' \\ 1 \end{bmatrix} \quad (7)$$

Here, z is represented as indicated by the following Expression (8). If a value of u and a value of v of the point p' are known, a value of x' and a value of y' are specified by Expressions (5) and (6). However, a value of z of the point p is unknown. $Z_0$ shown in Expression (8) represents a known value of a Z-axis coordinate of the point P in the XYZ coordinate system. Here, not the value of the Z-axis coordinate but a value of an X-axis coordinate or a value of a Y-axis coordinate of the point P may be known. In any case, in order to learn the value of z of the point p, additional information is necessary in addition to the value of u and the value of v of the point p'.
[Math. 8]

$$z = \frac{Z_0 + S^{-1} tvec}{S^{-1}[x \ y \ 1]} \quad (8)$$

A vector $S^{-1}$ shown in Expression (8) is represented as indicated by the following Expression (9). R[3, 1:3] is a third row vector from the top of the rotation matrix R.
[Math. 9]

$$S^{-1}=R[3, 1:3]^{-1} \quad (9)$$

When the value of the X-axis coordinate is a known value $X_0$, $Z_0$ of Expression (8) is replaced with $X_0$ and Expression (9) changes to $S^{-1}=R[1, 1:3]^{-1}$. R[1, 1:3] is a first row vector from the top of the rotation matrix R.
When the value of the Y-axis coordinate is a known value $Y_0$, $Z_0$ of Expression (8) is replaced with $Y_0$ and Expression (9) changes to $S^{-1}=R[2, 1:3]^{-1}$. R[2, 1:3] is a second row vector from the top of the rotation matrix R.
Lastly, the railroad track estimator 46 performs inverse conversion of Expression (1) using the following Expression (10). Consequently, the railroad track estimator 46 can convert the point p in the xyz coordinate system of the camera 2 into the point P in the XYZ coordinate system of the ranging device 3.
[Math. 10]

$$\begin{bmatrix} X \\ Y \\ Z \end{bmatrix} = R^{-1}\left( \begin{bmatrix} x \\ y \\ z \end{bmatrix} - tvec \right) \quad (10)$$

Alternatively, the distance from the ranging device 3 to the point P may be known. In the XYZ coordinate system, when the distance from a coordinate O3 (0, 0, 0) of the ranging device 3 to the point P (X, Y, Z) is represented as D, $X^2+Y^2+Z^2=D^2$. The following Expression (11) is obtained by substituting this in Expression (10). The value of z of the point p can be obtained by solving Expression (11).
[Math. 11]

$$\left(x'^2 + y'^2 + 1\right)z^2 + tvec^T \begin{bmatrix} x' \\ y' \\ 1 \end{bmatrix} z + tvec^T tvec - D^2 = 0 \quad (11)$$

Alternatively, the distance from the camera 2 to the point p may be known. In the xyz coordinate system, when the distance from a coordinate O2 (0, 0, 0) of the camera 2 to the point p (x, y, z) is represented as d, $x^2+y^2+z^2=d^2$. The following Expression (12) is obtained by substituting this in Expression (7). The value of z of the point p can be obtained by solving Expression (12).

[Math. 12]

$$z = \sqrt{x'^2 + y'^2 + 1} \qquad (12)$$

In any case, in order to convert the uv coordinate system (the image coordinate system of the camera 2) into the XYZ coordinate system (the three-dimensional coordinate system of the ranging device 3), the value of z of the point p needs to be known. In order to calculate the value of z of the point p, additional information such as a coordinate of any axis in the XYZ coordinate system of the point P is necessary.

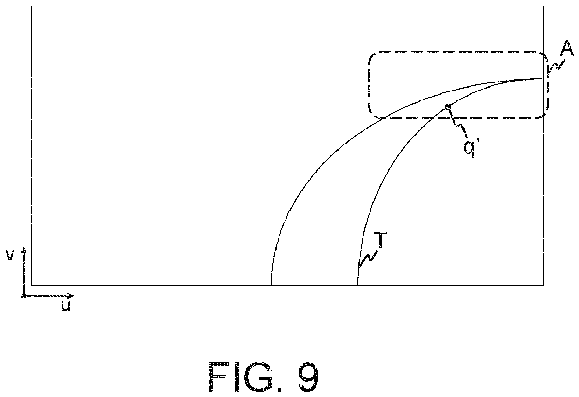

FIG. 9 is a diagram illustrating a railroad track image for describing a method of estimating a position of a railroad track in the region A. A point q' corresponds to a point included in a range in which a portion corresponding to a projection image is absent in the railroad track of the railroad track image, that is, a point on the railroad track T in the region A on the railroad track image. This range (a range of a railroad track portion included in the region A) is set as a target range that is a base of estimation. A point in the three-dimensional coordinate system of the camera 2 corresponding to the point q' is represented as a point q. The point q' is information that is present on the railroad track image but is absent on a 3D image. It is conceived to estimate a point (a point Q (X, Y, Z)) in the XYZ coordinate system corresponding to the point q'.

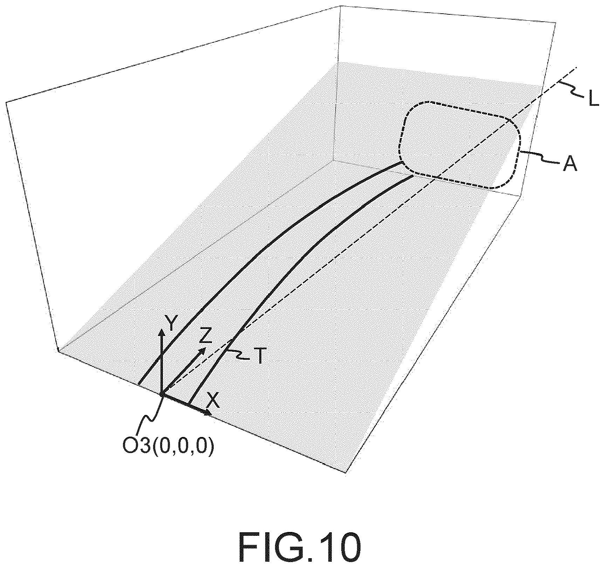

The position of the point Q in the XYZ coordinate system is unknown. However, when Expressions (5) to (10) are solved, it is seen that the point Q is present on a straight line (an epipolar line L) passing the origin O2 in the xyz coordinate system and the origin O3 in the XYZ coordinate system corresponding to a straight line passing the point q' (an epipolar constraint). The epipolar line L can be calculated based on the parameters concerning the camera 2 and the parameters concerning the ranging device 3. It is seen that the point Q is located somewhere on the epipolar line L illustrated in FIG. 10. FIG. 10 is a diagram in which the epipolar line L passing the point Q is added to FIG. 8.

Since it is known that the point Q is present on the epipolar line L, if a value of any one of XYZ coordinates or a distance D from the origin 3 of the point Q is known, values of the XYZ coordinates of the point Q can be estimated using Expression (8) or Expression (11). Alternatively, if a distance d from the point q to the origin O2 in the xyz coordinate system is known, values of XYZ coordinates of the point Q can be estimated using Expression (12).

(First estimation method)

In a first estimation method, the railroad track estimator 46 includes, for example, a train position estimation function and a map database. The train position estimation function acquires a current position of the train 10 from a positioning system such as a GPS (Global Positioning System). The railroad track estimator 46 calculates, for example, the altitude of the train 10 from the current position of the train 10 and the map database. The railroad track estimator 46 acquires the position and the altitude of the railroad track T from the map database. The altitude is, for example, an elevation or a height above sea level.

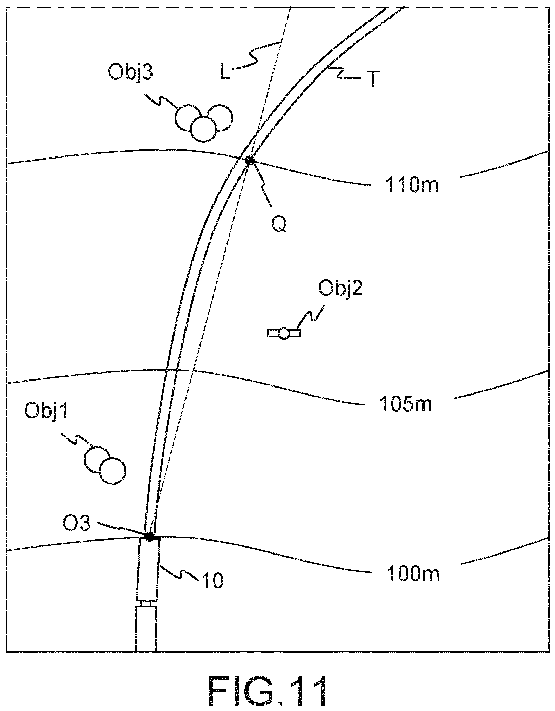

Here, the railroad track T on the map database is conceived. FIG. 11 is a diagram in which the current position of the train 10, that is, the origin O3 in the XYZ coordinate system is displayed on a map acquired from the map database. On the map illustrated in FIG. 11, contour lines indicating elevations 100 m, 105 m, and 110 m are displayed. The train 10 is illustrated to facilitate understanding. When the epipolar line L is displayed on the map illustrated in FIG. 11, it is seen that there is a point where the epipolar line L and the railroad track T cross (or intersect). This cross point (intersection) is estimated as the point Q. Note that, although a tilt in the height direction of the epipolar line L is seemed to be not considered in FIG. 11, actually, the tilt in the height direction of the epipolar line L is also considered.

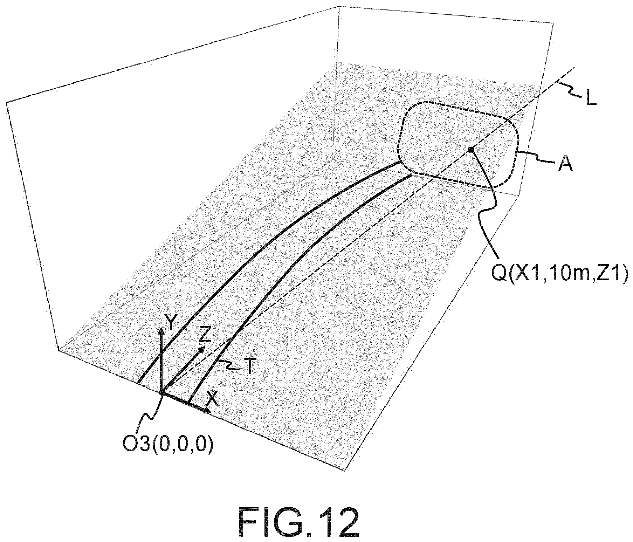

It is seen from the map illustrated in FIG. 11 that the current elevation of the train 10 is 100 m and the elevation of the point Q is 110 m. Accordingly, as illustrated in FIG. 12, it is seen that a coordinate of the point Q in the XYZ coordinate system is $(X_1, 10 \text{ m}, Z_1)$. $X_1$ and $Z_1$ are a value of an X coordinate and a value of a Z coordinate of the point Q made clear in a chain reaction manner because a value of a Y coordinate of the point Q has been made clear.

As described above, in the first estimation method, the values of the XYZ coordinates of the point Q are estimated by estimating the value of the Y coordinate of the point Q from the map database. By repeating the processing described above, it is possible to estimate a position of the railroad track T in the region A in the XYZ coordinate system.

(Second estimation method)

In a second estimation method, the railroad track estimator 46 estimates a value or a distance of any one of the XYZ coordinates from the pixels DT around the pixel DT of the railroad track T. For example, although the point Q itself is not measured by the ranging device 3, as illustrated in FIG. 6, for example, when the object Obj3 near the point Q is observed, the railroad track estimator 46 can estimate a value or a distance of any one of the XYZ coordinates of the point Q from an observed portion. Specifically, the railroad track estimator 46 specifies a railroad track portion not included in a 3D image (a railroad track portion corresponding to a 3D railroad track) in a railroad track included in a railroad track image. The railroad track estimator 46 detects, from the railroad track image, an object present close to the specified railroad track portion, a portion corresponding to the 3D image being included in the object. The railroad track estimator 46 estimates a three-dimensional position in the XYZ coordinate system of the railroad track portion corresponding to the 3D railroad track based on a three-dimensional position (a three-dimensional position in the three-dimensional coordinate system of the camera 2 or a three-dimensional position in the three-dimensional coordinate system of the ranging device 3) of the object. Alternatively, the railroad track estimator 46 estimates a three-dimensional position in the XYZ coordinate system of the railroad track portion corresponding to the 3D railroad track based on the distance from the view point of the camera 2 or the view point of the ranging device 3 to the object. As a specific example of the estimation, the same Z coordinate as the Z coordinate of the object may be set as an estimation value. As described above, in the second estimation method, the railroad track estimator 46 estimates values of the XYZ coordinates of the point Q by, for example, estimating a distance from the origin O3 to the point Q from an observed point near the point Q.

(Third estimation method)

In a third estimation method, the railroad track estimator 46 estimates a distance from the camera 2 to the point q using the number of pixels corresponding to the width of the railroad track T in a forward image (a railroad track image). It is assumed that the width of the railroad track T is known and is fixed. Under this precondition, the railroad track estimator 46 can calculate a distance from the camera 2 to the point q based on the number of pixels corresponding to the width of the railroad track T in the forward image, an angle of view of the camera 2, and the number of pixels of the forward image. If the distance from the camera 2 to the point q is known, the railroad track estimator 46 can learn the position of the point q and convert a coordinate of the point q into a coordinate of the point Q in the XYZ coordinate system using Expression (12). Consequently, the railroad track estimator 46 can estimate a position of the railroad track T in the region A. As described above, in the third estimation method, by estimating the distance d from the point q to the origin O2 in the xyz coordinate system, the railroad track estimator 46 estimates values of the XYZ coordinates of the point Q using the number of pixels corresponding to the width of the railroad track T in the forward image.

(Fourth estimation method)

In a fourth estimation method, the camera 2 is a stereo camera and the railroad track estimator 46 estimates a distance from the camera 2 to the point q. In the fourth estimation method, there are a first forward image and a second forward image as two first images simultaneously captured from two different places as forward images. The railroad track estimator 46 estimates a distance from the camera 2 to the point q from a parallax between the first forward image and the second forward image obtained by imaging the point q. If the distance from the camera 2 to the point q is known, a coordinate of the point Q in the XYZ coordinate system is specified using Expression (12), and the railroad track estimator 46 can estimate, in the XYZ coordinate system, the railroad track T in the region A. As described above, in the fourth estimation method, the railroad track estimator 46 estimates values of the XYZ coordinates of the point Q by estimating the distance d from the point q to the origin O2 in the xyz coordinate system using the stereo camera.

By performing any one of the kinds of processing described above or performing the kinds of processing in combination, it is possible to estimate a three-dimensional position of a railroad track portion not measured by the ranging device 3.

Note that, in the processing described above, the position of the railroad track T is specified and estimated in the XYZ coordinate system. However, the position of the railroad track T may be estimated in the xyz coordinate system.

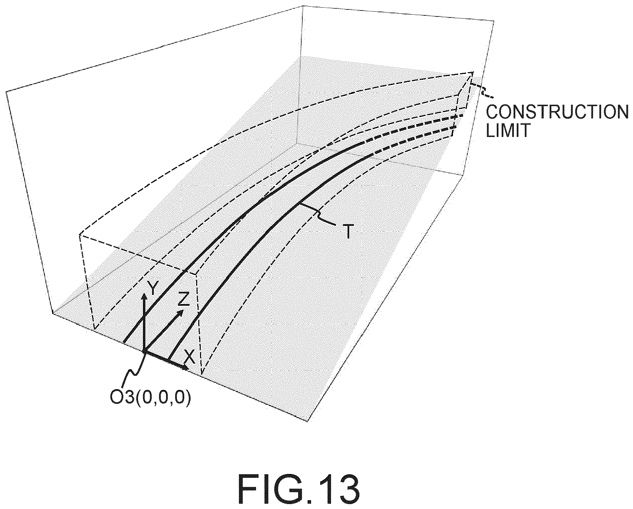

The obstacle detector 47 calculates a construction limit from the railroad track estimated by the railroad track estimator 46 and the railroad track extracted by the railroad track extractor 45 and determines whether an object (an obstacle) that can be obstructive to traveling of the train 10 is present within the construction limit. FIG. 13 is a diagram illustrating the construction limit calculated based on the estimated and extracted railroad tracks. The construction limit specifies a range in which buildings should not be installed over the railroad track T.

The obstacle detector 47 outputs a result of determining whether an object that can be obstructive to traveling is present within the construction limit. For example, when an object such as a large animal is detected within the construction limit, the obstacle detector 47 may determine that an object that can be obstructive to traveling is present. The obstacle detector 47 may output a determination result to a display visually recognizable by an operator of the train 10 or may output the determination result to an autonomous driving system of the train 10. The obstacle detector 47 may output the determination result only when determining that an obstructive object is present within the construction limit or may output the determination result irrespective of the determination result.

Note that the obstacle detector 47 may set a range wider than the construction limit and determine whether an obstructive object is present within the range. Consequently, for example, the operator can recognize a human present near the construction limit, although not entering the construction limit, and can take measures such as sounding a horn according to a situation.

<Flowchart of processing performed by the obstacle detection system 1>

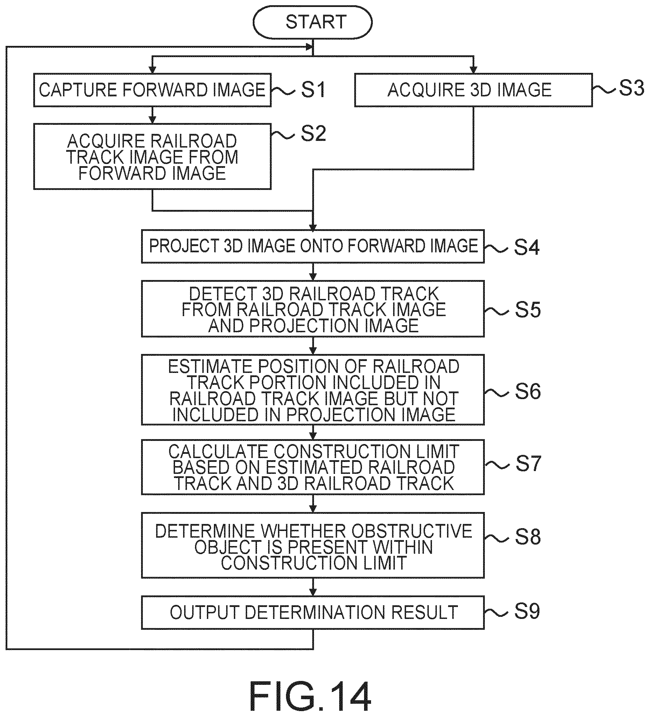

FIG. 14 is a flowchart of an example of processing performed by the obstacle detection system 1. The processing performed by the obstacle detection system 1 is described below with reference to FIG. 14 and the figures.

First, the camera 2 captures an image (the forward image: see FIG. 3) of a forward environment of the train 10 (step S1). The captured forward image is taken into the obstacle detection device 4 by the image acquirer 41.

Subsequently, the railroad track detector 42 detects the position of the railroad track T from the forward image, and acquires the railroad track image that extracts the railroad track T in the forward image (see FIG. 4) (step S2).

Substantially simultaneously with step S1, the ranging device 3 acquires a 3D image of the forward environment of the train 10 (step S3). The acquired 3D image is taken into the obstacle detection device 4 by the 3D data acquirer 43.

Subsequently, the projection image generator 44 projects the 3D image onto the railroad track image and acquires the projection image (see FIG. 6) (step S4).

Subsequently, the railroad track extractor 45 extracts, based on the railroad track image (see FIG. 4) and the projection image (see FIG. 6), from the projection image, a portion (the 3D railroad track: see FIG. 7) corresponding to the railroad track T included in the railroad track image (step S5).

Subsequently, the railroad track estimator 46 estimates, based on the extracted 3D railroad track and the railroad track image, in the XYZ coordinate, a railroad track portion that is included in the railroad track image but is not measured by the ranging device 3 (step S6).

Subsequently, the obstacle detector 47 calculates a construction limit from the railroad track portion estimated in the XYZ coordinate system and the 3D railroad track (step S7).

Subsequently, the obstacle detector 47 determines whether an obstacle is present within the calculated construction limit (step S8). For example, when an object equal to or larger than a predetermined size is present, the obstacle detector 47 may determine that an obstacle is present. Alternatively, the obstacle detector 47 may discriminate, using the railroad track image and semantic segmentation, a type of the object detected within the construction limit and, when the type of the object corresponds to a predetermined type of an obstacle, determine that an obstacle is present.

Subsequently, the obstacle detector 47 outputs a determination result (step S9). The obstacle detector 47 outputs the determination result to, for example, the autonomous driving system of the train 10.

When step S8 ends, the processing returns to steps S1 and S3 and the steps are sequentially repeated. Note that the steps may be performed in parallel to the other steps. For example, the camera 2 may continue to capture the forward image even while the image acquirer 41 is acquiring the forward image in step S2.

As described above, according to this embedment, the ranging device 3 and the camera 2 are combined to estimate a position of a railroad track in a range in which ranging cannot be performed by the ranging device 3. This makes it possible to detect an obstacle even at a far distance at which measurement cannot be performed by the ranging device 3. This makes it possible to improve detection accuracy of a distance at which the obstacle can be detected and detection accuracy of the obstacle.

(Another operation example 1)

In this approach, the camera 2 and the ranging device 3 are the separate devices. However, the camera 2 and the ranging device 3 may be an integral device. In this case, if it can be regarded that the view points and the visual fields of the camera 2 and the ranging device 3 are the same and the camera 2 and the ranging device 3 are present in the same coordinate system, the projection image generator 44 may be omitted. A 3D image of the ranging device 3 may be directly used instead of a projection image.

(Another operation example 2)

The obstacle detection device 4 may be associated with a brake control system of a train. The brake control system may perform brake control for a car according to a determination result output by the obstacle detection device 4. For example, when an obstructive object is detected, control for stopping the train in a position before the position of the detected object may be performed.

(Hardware configuration)

FIG. 16 illustrates a hardware configuration of the information processing device according to each approach. The information processing device is configured as a computer device 600. The computer device 600 includes a CPU 601, an input interface 602, a display device 603, a communication device 604, a main storage device 605, and an external storage device 606, and these components are mutually connected through a bus 607.

The CPU (central processing unit) 601 executes an information processing program as a computer program on the main storage device 605. The information processing program is a computer program configured to achieve each above-described functional composition of the present device. The information processing program may be achieved by a combination of a plurality of computer programs and scripts instead of one computer program. Each functional composition is achieved as the CPU 601 executes the information processing program.

The input interface 602 is a circuit for inputting, to the present device, an operation signal from an input device such as a keyboard, a mouse, or a touch panel. The input interface 602 corresponds to the input device in each approach.

The display device 603 displays data output from the present device. The display device 603 is, for example, a liquid crystal display (LCD), an organic electroluminescence display, a cathode-ray tube (CRT), or a plasma display (PDP) but is not limited thereto. Data output from the computer device 600 can be displayed on the display device 603. The display device 603 corresponds to the output device in each approach.

The communication device 604 is a circuit for the present device to communicate with an external device in a wireless or wired manner. Data can be input from the external device through the communication device 604. The data input from the external device can be stored in the main storage device 605 or the external storage device 606.

The main storage device 605 stores, for example, the information processing program, data necessary for execution of the information processing program, and data generated through execution of the information processing program. The information processing program is loaded and executed on the main storage device 605. The main storage device 605 is, for example, a RAM, a DRAM, or an SRAM but is not limited thereto. Each storage or database in the information processing device in each approach may be implemented on the main storage device 605.

The external storage device 606 stores, for example, the information processing program, data necessary for execution of the information processing program, and data generated through execution of the information processing program. The information processing program and the data are read onto the main storage device 605 at execution of the information processing program. The external storage device 606 is, for example, a hard disk, an optical disk, a flash memory, or a magnetic tape but is not limited thereto. Each storage or database in the information processing device in each approach may be implemented on the external storage device 606.

The information processing program may be installed on the computer device 600 in advance or may be stored in a storage medium such as a CD-ROM. Moreover, the information processing program in each approach may be uploaded on the Internet.

The present device may be configured as a single computer device 600 or may be configured as a system including a plurality of mutually connected computer devices 600.

The approaches as described before may be configured as below.

(Clauses)

1. An information processing device comprising:

a first image acquirer configured to acquire a first image generated by an imaging device that images a forward environment of a vehicle;
a railroad track detector configured to detect, from the first image, a railroad track on which the vehicle travels;
a second image acquirer configured to acquire a second image including a three-dimensional position of the forward environment, the three-dimensional position being based on distance information acquired by a ranging device that measures a distance to the forward environment; and
a railroad track estimator configured to specify, in the railroad track included in the first image, a target range in which a portion corresponding to the railroad track is absent in the second image and estimate, based on information concerning the railroad track on which the vehicle travels, a three-dimensional position of a railroad track portion included in the target range in the railroad track of the first image.

2. The information processing device according to clause 1, wherein the railroad track estimator estimates, based on map data including a three-dimensional position of the railroad track on which the vehicle travels, the three-dimensional position of the railroad track portion included in the target range.

3. The information processing device according to clause 1 or 2, wherein

the imaging device is provided in a three-dimensional first coordinate system and the ranging device is provided in a three-dimensional second coordinate system,
the information processing device further comprises a projection image generator configured to project the second image onto the first image and generate a projection image,
the target range is a range in which, in the railroad track included in the first image, a portion corresponding to the railroad track is absent in the projection image, and
the railroad track estimator estimates a three-dimensional position in the second coordinate system of the railroad track portion included in the target range.

4. The information processing device according to clause 3, wherein the railroad track estimator calculates an epipolar line from a view point of the ranging device, the epipolar line corresponding to a straight line passing the railroad track portion included in the target range from a view point of the imaging device,

calculates, based on map data including three-dimensional position information of the railroad track on which the vehicle travels, a position where the epipolar line and the railroad track in the map data cross, and
determines the calculated position as an estimation value of the three-dimensional position in the second coordinate system of the railroad track portion included in the target range.

5. The information processing device according to clause 3 or 4, wherein the railroad track estimator estimates, on a premise that width of the railroad track is fixed, a three-dimensional position in the first coordinate system of the railroad track portion included in the target range and
converts the three-dimensional position of the railroad track portion in the first coordinate system into the three-dimensional position in the second coordinate system.

6. The information processing device according to any one of clauses 3 to 5, wherein the railroad track estimator detects an object present close to the railroad track portion included in the target range in the first image, a portion corresponding to the second image being included in the object, and
estimates, based on a three-dimensional position of the object in the first coordinate system or the second coordinate system or based on a distance from a view point of the imaging device or a view point of the ranging device to the object, the three-dimensional position in the second coordinate system of the railroad track portion included in the target range.

7. The information processing device according to any one of clauses 3 to 6, wherein

the imaging device is a stereo camera, and the stereo camera generates the first image of a plurality of view points, and
the railroad track estimator estimates, based on the first image of the plurality of view points, a three-dimensional position in the first coordinate system of the railroad track portion included in the target range and
converts the three-dimensional position of the railroad track portion in the first coordinate system into the three-dimensional position in the second coordinate system.

8. The information processing device according to any one of clauses 1 to 7, further comprising an obstacle detector configured to calculate, based on the three-dimensional position of the railroad track portion estimated by the railroad track estimator, a construction limit of the railroad track portion estimated by the railroad track estimator and
detect an object obstructive to traveling of the vehicle in the construction limit using the first image and the second image.

9. The information processing device according to clause 1, wherein the vehicle is a train.

10. The information processing device according to any one of clauses 1 to 9, further comprising the imaging device and the ranging device.

11. An information processing method comprising:

acquiring a first image generated by an imaging device that images a forward environment of a vehicle;

detecting, from the first image, a railroad track on which the vehicle travels;

acquiring a second image including a three-dimensional position of the forward environment, the three-dimensional position being based on distance information acquired by a ranging device that measures a distance to the forward environment; and

specifying, in the railroad track included in the first image, a target range in which a portion corresponding to the railroad track is absent in the second image; and

estimating, based on information concerning the railroad track on which the vehicle travels, a three-dimensional position of a railroad track portion included in the target range in the railroad track of the first image.

While certain arrangements have been described, these arrangements have been presented by way of example only, and are not intended to limit the scope of the inventions. Indeed, the apparatuses* described herein may be embodied in a variety of other forms; furthermore various omissions, substitutions and changes in the form of the apparatuses described herein may be made.

**Claims**

1. An information processing device comprising:

   a first image acquirer configured to acquire a first image generated by an imaging device that images a forward environment of a vehicle;

   a railroad track detector configured to detect, from the first image, a railroad track on which the vehicle travels;

   a second image acquirer configured to acquire a second image including a three-dimensional position of the forward environment, the three-dimensional position being based on distance information acquired by a ranging device that measures a distance to the forward environment; and

   a railroad track estimator configured to specify, in the railroad track included in the first image, a target range in which a portion corresponding to the railroad track is absent in the second image and estimate, based on information concerning the railroad track on which the vehicle travels, a three-dimensional position of a railroad track portion included in the target range in the railroad track of the first image.

2. The information processing device according to claim 1, wherein the railroad track estimator estimates, based on map data including a three-dimensional position of the railroad track on which the vehicle travels, the three-dimensional position of the railroad track portion included in the target range.

3. The information processing device according to claim 1 or 2, wherein

   the imaging device is provided in a three-dimensional first coordinate system and the ranging device is provided in a three-dimensional second coordinate system,

   the information processing device further comprises a projection image generator configured to project the second image onto the first image and generate a projection image,

   the target range is a range in which, in the railroad track included in the first image, a portion corresponding to the railroad track is absent in the projection image, and

   the railroad track estimator estimates a three-dimensional position in the second coordinate system of the railroad track portion included in the target range.

4. The information processing device according to claim 3, wherein the railroad track estimator calculates an epipolar line from a view point of the ranging device, the epipolar line corresponding to a straight line passing the railroad track portion included in the target range from a view point of the imaging device,

   calculates, based on map data including three-dimensional position information of the railroad track on which the vehicle travels, a position where the epipolar line and the railroad track in the map data cross, and

   determines the calculated position as an estimation value of the three-dimensional position in the second coordinate system of the railroad track portion included in the target range.

5. The information processing device according to claim 3 or 4, wherein the railroad track estimator estimates, on a premise that width of the railroad track is fixed, a three-dimensional position in the first coordinate system of the railroad track portion included in the target range and

converts the three-dimensional position of the railroad track portion in the first coordinate system into the three-dimensional position in the second coordinate system.

6. The information processing device according to any one of claims 3 to 5, wherein the railroad track estimator detects an object present close to the railroad track portion included in the target range in the first image, a portion corresponding to the second image being included in the object, and

estimates, based on a three-dimensional position of the object in the first coordinate system or the second coordinate system or based on a distance from a view point of the imaging device or a view point of the ranging device to the object, the three-dimensional position in the second coordinate system of the railroad track portion included in the target range.

7. The information processing device according to any one of claims 3 to 6, wherein

the imaging device is a stereo camera, and the stereo camera generates the first image of a plurality of view points, and
the railroad track estimator estimates, based on the first image of the plurality of view points, a three-dimensional position in the first coordinate system of the railroad track portion included in the target range and
converts the three-dimensional position of the railroad track portion in the first coordinate system into the three-dimensional position in the second coordinate system.

8. The information processing device according to any one of claims 1 to 7, further comprising an obstacle detector configured to calculate, based on the three-dimensional position of the railroad track portion estimated by the railroad track estimator, a construction limit of the railroad track portion estimated by the railroad track estimator and detect an object obstructive to traveling of the vehicle in the construction limit using the first image and the second image.

9. The information processing device according to claim 1, wherein the vehicle is a train.

10. The information processing device according to any one of claims 1 to 9, further comprising the imaging device and the ranging device.

11. An information processing method comprising:

acquiring a first image generated by an imaging device that images a forward environment of a vehicle;
detecting, from the first image, a railroad track on which the vehicle travels;
acquiring a second image including a three-dimensional position of the forward environment, the three-dimensional position being based on distance information acquired by a ranging device that measures a distance to the forward environment; and
specifying, in the railroad track included in the first image, a target range in which a portion corresponding to the railroad track is absent in the second image; and
estimating, based on information concerning the railroad track on which the vehicle travels, a three-dimensional position of a railroad track portion included in the target range in the railroad track of the first image.

OBSTACLE DETECTION DEVICE

4

1

2 CAMERA

41 IMAGE ACQUIRER

42 RAILROAD TRACK DETECTOR

3 RANGING DEVICE

43 3D DATA ACQUIRER

44 PROJECTION IMAGE GENERATOR

45 RAILROAD TRACK EXTRACTOR

46 RAILROAD TRACK ESTIMATOR

47 OBSTACLE DETECTOR

# FIG. 1

FIG. 2

FIG. 3

FIG. 4

FIG. 5

FIG. 6

FIG. 7

FIG. 8

FIG. 9

FIG.10

FIG.11

FIG.12

CONSTRUCTION
LIMIT

T

O3(0,0,0)

FIG.13

START

CAPTURE FORWARD IMAGE ⌇ S1    ACQUIRE 3D IMAGE ⌇ S3

ACQUIRE RAILROAD TRACK IMAGE FROM FORWARD IMAGE ⌇ S2

PROJECT 3D IMAGE ONTO FORWARD IMAGE ⌇ S4

DETECT 3D RAILROAD TRACK FROM RAILROAD TRACK IMAGE AND PROJECTION IMAGE ⌇ S5

ESTIMATE POSITION OF RAILROAD TRACK PORTION INCLUDED IN RAILROAD TRACK IMAGE BUT NOT INCLUDED IN PROJECTION IMAGE ⌇ S6

CALCULATE CONSTRUCTION LIMIT BASED ON ESTIMATED RAILROAD TRACK AND 3D RAILROAD TRACK ⌇ S7

DETERMINE WHETHER OBSTRUCTIVE OBJECT IS PRESENT WITHIN CONSTRUCTION LIMIT ⌇ S8

OUTPUT DETERMINATION RESULT ⌇ S9

# FIG.14

25

FIG.15

Europäisches Patentamt

European Patent Office

Office européen des brevets

# EUROPEAN SEARCH REPORT

**Application Number**

EP 24 16 0333

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 829 155 A1 (TOSHIBA KK [JP]; TOSHIBA INFRASTRUCTURE SYSTEMS & SOLUTIONS CORP [JP]) 2 June 2021 (2021-06-02) | 1,3,5-7, 9-11 | INV. B61L23/04 G06T17/05 |
| Y | * abstract; figures 1-4 * * paragraphs [0007] - [0041] * | 8 | G06T7/30 |
| Y | EP 3 705 371 A1 (TOSHIBA KK [JP]; TOSHIBA INFRASTRUCTURE SYSTEMS & SOLUTIONS CORP [JP]) 9 September 2020 (2020-09-09) | 8 | |
| A | * paragraphs [0009] - [0036]; figures 1-5 * | 1-7,9-11 | |
| A | US 2018/012085 A1 (BLAYVAS ILYA [IL] ET AL) 11 January 2018 (2018-01-11) * paragraphs [0028] - [0056]; figures 1-5 * * paragraphs [0087] - [0101] * | 1-11 | |
| A | EP 1 780 675 A1 (TOKYO INST TECH [JP]; HONDA MOTOR CO LTD [JP]) 2 May 2007 (2007-05-02) * paragraphs [0007] - [0017], [0115] - [0118]; figures 1-17, 24-27 * | 1-11 | **TECHNICAL FIELDS SEARCHED (IPC)** B61L G06T |

The present search report has been drawn up for all claims

| Place of search | Date of completion of the search | Examiner |
|---|---|---|
| Munich | 30 July 2024 | Robinson, Victoria |

EPO FORM 1503 03.82 (P04C01)

## ANNEX TO THE EUROPEAN SEARCH REPORT
## ON EUROPEAN PATENT APPLICATION NO.

EP 24 16 0333

This annex lists the patent family members relating to the patent documents cited in the above-mentioned European search report.
The members are as contained in the European Patent Office EDP file on
The European Patent Office is in no way liable for these particulars which are merely given for the purpose of information.

30-07-2024

| Patent document cited in search report | | Publication date | Patent family member(s) | | Publication date |
|---|---|---|---|---|---|
| EP 3829155 | A1 | 02-06-2021 | CN | 112470456 A | 09-03-2021 |
| | | | EP | 3829155 A1 | 02-06-2021 |
| | | | JP | 7150508 B2 | 11-10-2022 |
| | | | JP | 2020017824 A | 30-01-2020 |
| | | | SG | 11202012917R A | 25-02-2021 |
| | | | WO | 2020021949 A1 | 30-01-2020 |
| EP 3705371 | A1 | 09-09-2020 | CN | 111295321 A | 16-06-2020 |
| | | | EP | 3705371 A1 | 09-09-2020 |
| | | | JP | 7062407 B2 | 06-05-2022 |
| | | | JP | 2019084881 A | 06-06-2019 |
| | | | WO | 2019088267 A1 | 09-05-2019 |
| US 2018012085 | A1 | 11-01-2018 | CN | 107380164 A | 24-11-2017 |
| | | | US | 2018012085 A1 | 11-01-2018 |
| EP 1780675 | A1 | 02-05-2007 | EP | 1780675 A1 | 02-05-2007 |
| | | | JP | 4328692 B2 | 09-09-2009 |
| | | | JP | 2006053756 A | 23-02-2006 |
| | | | US | 2009169052 A1 | 02-07-2009 |
| | | | WO | 2006016663 A1 | 16-02-2006 |

EPO FORM P0459

For more details about this annex : see Official Journal of the European Patent Office, No. 12/82